# EUROPÄISCHE PATENTSCHRIFT

(11) **EP 2 144 830 B1**
(45) Veröffentlichungstag und Bekanntmachung des Hinweises auf die Patenterteilung: **06.04.2016**
(21) Anmeldenummer: 08759581.5
(22) Anmeldetag: 14.05.2008
(51) Int. Cl.: B65G 57/00, B65G 57/24, B65G 57/06

(54) **VERFAHREN UND VORRICHTUNG ZUM VERPACKEN VON GETRÄNKE-GROSSGEBINDEN**
METHOD AND DEVICE FOR PACKING LARGE DRINKS PACKS
PROCÉDÉ ET DISPOSITIF POUR EMBALLER DES GRANDS EMBALLAGES POUR BOUTEILLES

(30) Priorität: 14.05.2007 DE 102007022909; 27.12.2007 DE 102007063286
(43) Veröffentlichungstag der Anmeldung: 20.01.2010
(73) Patentinhaber: Krones AG, 93073 Neutraubling (DE)
(72) Erfinder: PERL, Kurt, 83253 Rimsting (DE)
(74) Vertreter: Bittner, Bernhard
(86) Internationale Anmeldenummer: PCT/EP2008/055897
(87) Internationale Veröffentlichungsnummer: WO 2008/138947

(56) Entgegenhaltungen:
- WO-A-02/02446
- FR-A- 2 878 238

## Beschreibung

Die vorliegende Erfindung bezieht sich auf eine Vorrichtung und ein Verfahren zum Palettieren von Stückgutzusammenstellungen.

Palettierer sind aus dem Stand der Technik bekannt. Dabei wird zum Beladen einer Palette zunächst eine leere Palette in einer Ladestation bereitgestellt und auf diese werden anschließend lagenweise Gebinde wie beispielsweise Flaschenkästen, Einweggebinde oder dergleichen abgelegt. Üblicherweise werden dabei zwischen einzelnen Gebindelagen Zwischenlagen beispielsweise aus Papier oder Karton angeordnet.

Aus der DE 29 45 883 A1 ist eine Vorrichtung zum Beladen von Paletten mit Stückgütern bekannt. Diese Vorrichtung weist quer zu einer Lagenüberschubrichtung verlaufende Abstützschienen auf, in denen eine Unterstützungsebene geführt ist.

Die Druckschrift WO 02/02446 A1 offenbart ein Verfahren und eine Vorrichtung zum Platzieren einer Vielzahl von Einzelgebinden auf einer entsprechenden Ablage, wobei beispielsweise mittels einer Verschiebeeinrichtung eine Abstützlage und eine Gebindeanordnung von einer ersten Position in eine zweite Position verschoben wird, so dass in einem Arbeitsschritt eine Abstützlage und die darauf anzuordnenden Gebinde in einem entsprechenden Regalelement anordenbar sind.

Aus der Druckschrift FR 2 878 238 ist eine weitere Vorrichtung zum Bilden von Stapeln aus Stückgutzusammenstellungen bekannt, wobei Stückgutzusammenstellungen in eine Transporteinrichtung eingeführt werden und diese gegenüber einer und auf eine Abstützeinrichtung der Transporteinrichtung verschoben werden. Weiterhin ist eine Fixiereinrichtung vorhanden, durch welche Zwischenlagen von der Transporteinrichtung aufgenommen werden können.

Aus der G 92 02 553.6 ist eine Vorrichtung zum Auflösen und Bilden von Stückgutstapeln bekannt. Diese Vorrichtung weist eine Vielzahl von Vakuumgreifern auf, welche die Stückgüter selbst von oben greifen. Unterhalb dieser Vakuumgreifer ist eine Abstützebene in Form eines Rollenteppichs vorgesehen, der unter die Stückgutlage verfahren werden kann. Daneben sind Klemmleisten vorgesehen, um die Stückgutlagen einzuklemmen.

Weiterhin ist es aus dem Stand der Technik bekannt, dass derartige Palettieranlagen jeweils in Abfolge eine Zwischenlage, anschließend eine Gebindelage und anschließend wieder eine Zwischenlage aufeinander anordnen. Dieses Verfahren ist jedoch relativ zeitintensiv.

Der vorliegenden Erfindung liegt daher die Aufgabe zugrunde, eine Palettieranlage zur Verfügung zu stellen, welche eine höhere Palletiergeschwindigkeit erlaubt.

Dies wird erfindungsgemäß durch Vorrichtungen nach Anspruch 1 und 12 sowie ein Verfahren nach Anspruch 13 erreicht. Vorteilhafte Ausführungsformen und Weiterbildungen sind Gegenstand der Unteransprüche.

Eine erfindungsgemäße Vorrichtung zum Bilden von Stapeln aus Stückgutzusammenstellungen weist eine bewegliche Transporteinrichtung zum Transportieren der Stückgutzusammenstellungen auf. Daneben ist eine Zuführeinrichtung vorgesehen, die der Transporteinrichtung die Stückgutzusammenstellung zuführt und eine Abstützeinrichtung, die unter die Stückgutzusammenstellung bewegbar und die im Wesentlichen vollständig aus einem unterhalb der Stückgutzusammenstellung liegenden Bereich entfernbar ist. Dabei weist die Transporteinrichtung wenigstens eine steuerbare Fixiereinrichtung zum vorübergehenden Fixieren einer Zwischenlage auf, wobei diese Fixiereinrichtung zum Fixieren der Zwischenlage unterhalb der Abstützeinrichtung bewegbar ist und die Abstützeinrichtung gegenüber der Transporteinrichtung bewegbar ist. Erfindungsgemäß ist die Fixiereinrichtung derart in die Abstützeinrichtung integriert, dass ihre Bewegung an die Bewegung der Abstützeinrichtung gekoppelt ist.

Damit wird erfindungsgemäß vorgeschlagen, dass die Transporteinrichtung für die Stückgutzusammenstellungen bzw. die Gebindelagen kombiniert wird mit einer Fixiereinrichtung für die zwischen die Gebindelagen anzuordnende Zwischenlage. Auf diese Weise kann mit Hilfe nur einer Vorrichtung schneller ein Stapel gebildet werden. Bei den Stückgutzusammenstellungen handelt es sich, wie oben erwähnt, um die zu palenttierenden Lagen von Gebinden. Zum Palettieren kann beispielsweise mit Hilfe der erfindungsgemäßen Vorrichtung zunächst eine Zwischenlage abgelegt werden und dann ohne Zeitverlust oberhalb der Zwischenablage eine Stückgutzusammenstellung. Dieser Vorgang kann anschließend wiederholt werden. Damit kann eine wesentliche Beschleunigung gegenüber bislang bekannten Verfahren erreicht werden und es sind vorteilhafterweise keine zusätzlichen Bewegungsvorrichtungen zum Einlegen der Zwischenlagen notwendig.

Bevorzugt führt die Zuführeinrichtung die Stückgutzusammenstellung der Transporteinrichtung quer zu, d.h. die Stückgutzusammenstellung wird im Wesentlichen in einer horizontalen Richtung geführt. Die Transporteinrichtung weist bevorzugt eine seitliche Öffnung auf, durch welche hindurch die Stückgutzusammenstellung in die Transporteinrichtung hinein geschoben werden kann. Unter einem Bewegen unter die Stückgutzusammenstellung wird verstanden, dass die Fixiereinrichtung in eine Position bewegt werden kann, welche tiefer liegt als die Stückgutzusammenstellung. Dabei ist es auch denkbar, dass die Fixiereinrichtung innerhalb eines Bereiches, der unterhalb der Stückgutzusammenstellung liegt, bewegt wird.

Unter einer Fixiereinrichtung wird eine Einrichtung verstanden, welche in der Lage ist, eine Zwischenlage zumindest vorübergehend an der Transporteinrichtung zu halten.

Dabei ist die Fixiereinrichtung derart in die Abstützeinrichtung integriert, dass ihre Bewegung an die Bewegung der Abstützeinrichtung gekoppelt ist. Für das erfindungsgemäße Verfahren ist es damit möglich, zunächst eine Zwischenablage abzulegen und anschließend die Abstützeinrichtung gemeinsam mit der Fixiereinrichtung aus dem Bereich unterhalb der Stückgutzusammenstellung zu entfernen. Vorzugsweise ist die Fixiereinrichtung zur Durchführung des Fixiervorgangs in einem Bereich angeordnet, der unterhalb der Abstützeinrichtung liegt, so dass die Zwischenlage unterhalb der Stückgutzusammenstellung gehalten werden kann.

Bei einer weiteren vorteilhaften Ausführungsform weist die Abstützeinrichtung eine Vielzahl von drehbaren Körpern auf, denen gegenüber die Stückgutzusammenstellung abstützbar ist. Wie oben erwähnt, ist es in einem Verfahrensschritt nötig, die Abstützeinrichtung gegenüber der Stückgutzusammenstellung zu bewegen. Um zu verhindern, dass durch diesen Vorgang beispielsweise Gebinde umschließende Folien zerrissen werden, sind die erwähnten frei drehbaren Körper vorgesehen, welche ein Abrollen gegenüber der Stückgutzusammenstellung ermöglichen.

Bei einer weiteren vorteilhaften Ausführungsform ist die Abstützeinrichtung in der Ebene einer Bodenfläche der Stückgutzusammenstellung gegenüber der Stückgutzusammenstellung bewegbar. Genauer gesagt ist es möglich, die Abstützeinrichtung vorhangartig gegenüber der Stückgutzusammenstellung zu verschieben. Zu diesem Zweck werden die drehbaren Körper oder diese drehbaren Körper tragende Wellen oder Achsen in zweiseitigen Schienen geführt.

Bei einer weiteren vorteilhaften Ausführungsform weist die Fixiereinrichtung wenigstens ein Fixierelement auf, welches zwischen zwei drehbaren Körpern angeordnet ist. Genauer gesagt, sind die Fixierelemente in dem aus einer Vielzahl von drehbaren Körpern gebildeten Vorhang integriert.

Bei einer weiteren vorteilhaften Ausführungsform weist die Fixiereinrichtung einen leistenförmigen Körper auf, der in zwei seitlichen Schienen gemeinsam mit den drehbaren Körpern bewegbar ist. Dies bedeutet, dass ein derartiger leistenförmiger Körper beispielsweise zwischen zwei drehbaren Körpern angeordnet sein kann und damit gemeinsam mit diesen drehbaren Körpern gegenüber der Stückgutzusammenstellung verschiebbar ist.

Bei einer weiteren vorteilhaften Ausführungsform ist wenigstens ein Fixierelement ein steuerbarer Saugkopf. Damit wird vorgeschlagen, wenigstens einen derartigen Saugkopf in der Abstützeinrichtung, die bevorzugt als Jalousieteppich ausgeführt ist, anzubringen. Daneben wäre es jedoch auch möglich, eine Fixiereinrichtung beispielsweise in Form einer Klemmvorrichtung unterhalb der Abstützeinrichtung anzubringen. Unter einem steuerbaren Saugkopf wird verstanden, dass der Fixiervorgang durch den Benutzer oder durch eine Maschinensteuerung gesteuert werden kann, so dass wahlweise eine anzuhebende Zwischenlage aufgenommen und gelöst werden kann.

Bei einer weiteren bevorzugen Ausführungsform weist die Fixiereinrichtung zwei voneinander beabstandete leistenförmige Körper auf, wobei an jedem dieser leistenförmigen Körper wenigstens ein Fixierelement angeordnet ist und wobei zwischen diesen beiden leistenförmigen Körpern eine Vielzahl von drehbaren Körpern vorgesehen ist.

Vorzugsweise weist auch jeder dieser leistenförmigen Körper wenigstens zwei derartige Fixierelemente auf. Auf diese Weise kann in besonders vorteilhafter Weise über eine möglichst große Fläche der Zwischenlagen eine Vielzahl von derartigen Fixierelementen im Wesentlichen gleichförmig verteilt werden, so dass ein besonders effizienter Halt der Zwischenlagen möglich ist.

Bei einer weiteren vorteilhaften Ausführungsform weist die Abstützeinrichtung zwei zueinander im Wesentlichen symmetrisch ausgebildete Teilabschnitte auf. Zum Öffnen des Bodens der Transporteinrichtung schieben sich diese beiden Teilabschnitte auseinander und geben auf diese Weise den Bereich unterhalb der Stückgutzusammenstellung frei.

Bei einer weiteren vorteilhaften Ausführungsform ist die Transporteinrichtung in ihrer Gesamtheit an einem um eine vertikale Achse schwenkbaren Arm angeordnet. Auf diese Weise kann die Transporteinrichtung Stückgutzusammenstellungen greifen und an einer anderen Stelle, beispielsweise auf eine Palette, ablegen.

Bei einer weiteren vorteilhaften Ausführungsform weist die Vorrichtung eine Heranführungseinheit auf, welche die Zwischenlagen an eine Unterseite der Abstützeinrichtung heranführt. Auf diese Weise wird erreicht, dass die Transporteinrichtung, ohne über weite Strecken bewegt werden zu müssen, sowohl die Stückgutzusammenstellung als auch die Zwischenlage aufnehmen kann, wodurch kurze Taktzeiten erreichbar sind.

Bei einer weiteren bevorzugten Ausführungsform weist die Transporteinrichtung eine Koppeleinrichtung auf, welche in einem Betriebszustand in Fluidverbindung mit der Fixiereinrichtung steht und die in einem weiteren Betriebszustand der Fixiereinrichtung von dieser getrennt ist. Genauer gesagt dient diese Koppeleinrichtung dazu, um ein Vakuum an die als Saugköpfe ausgestalteten Fixierelemente an der Abstützeinrichtung zu geben. In einem geschlossenen Zustand der Abstützeinrichtung bzw. des Rollenteppichs dockt die Koppeleinrichtung an die Saugleisten der Abstützeinrichtung an und anschließend kann diese mit einem Vakuum beaufschlagt werden.

Diese Koppeleinrichtung wird bevorzugt auch verwendet, um die Saugköpfe zeitweise mit Druckluft zu beaufschlagen, um auf diese Weise die jeweilige Zwischenlage von den Saugköpfen zu lösen. Vorzugsweise ist die Koppeleinrichtung schwenkbar ausgeführt und kann durch diesen Schwenkvorgang an die Leisten angelegt oder von diesen weggezogen werden.

Die vorliegende Erfindung ist weiterhin auf eine Transporteinrichtung zum Transportieren der Stückgutzusammenstellung gerichtet, mit einer Abstützeinrichtung, die unter die Stückgutzusammenstellung bewegbar ist und die im Wesentlichen vollständig aus einem senkrecht unterhalb der Stückgutzusammenstellung liegenden Bereich entfernbar ist.

Dabei weist die Transporteinrichtung wenigstens eine steuerbare Fixiereinrichtung zum vorübergehenden Fixieren einer Zwischenlage auf, wobei diese Fixiereinrichtung zum Fixieren der Zwischenlage unterhalb die Stückgutzusammenstellung bewegbar ist und wobei die Fixiereinrichtung derart in die Abstützeinrichtung integriert ist, dass ihre Bewegung und die Bewegung der Abstützeinrichtung gekoppelt ist. Erfindungsgemäß ist dabei die Abstützeinrichtung gegenüber der Transporteinrichtung bewegbar.

Die vorliegende Erfindung ist weiterhin auf ein Verfahren zum Bilden von Stapeln aus Stückgutzusammenstellungen gerichtet. Dabei wird in einem Verfahrensschritt die Stückgutzusammenstellung in eine Transporteinrichtung eingeführt, wobei die Stückgutzusammenstellung gegenüber einer Abstützeinrichtung der Transporteinrichtung bewegt und auf diese Abstützeinrichtung verschoben wird. In einem weiteren Verfahrensschritt wird die Transporteinrichtung transportiert, wobei während des Transports die Stückgutzusammenstellung durch die Abstützeinrichtung abgestützt wird.

Dabei wird mittels einer an der Abstützeinrichtung angeordneten Fixiereinrichtung eine Zwischenlage wenigstens zeitweise von der Transporteinrichtung aufgenommen und die Abstützeinrichtung gegenüber der Transporteinrichtung bewegt. Erfindungsgemäß wird die in der Abstützeinrichtung integrierte und mit der Abstützeinrichtung gekoppelte Fixiereinrichtung gemeinsam mit der Abstützeinrichtung gegenüber der Stückgutzusammenstellung bewegt.

Damit wird auch bei dem erfindungsgemäßen Verfahren sowohl die Stückgutzusammenstellung selbst als auch die Zwischenlage von der gleichen Transporteinrichtung gegriffen, so dass auch hier eine zeitliche Einsparung möglich ist.

Bevorzugt wird die Transporteinrichtung selbst mit der Stückgutzusammenstellung und mit der Zwischenlage durch eine Hubbewegung und ggf. auch durch eine Schwenkbewegung bewegt um die Zwischenlage und die Stückgutzusammenstellung beispielsweise auf einer Palette abzulegen.

Bei einem bevorzugten Verfahren wird die Fixiereinrichtung gemeinsam mit der Abstützeinrichtung gegenüber der Stückgutzusammenstellung bewegt. Damit ist auch hier die Fixiereinrichtung an die Abstützeinrichtung gekoppelt so dass auf diese Weise der gesamte Bewegungsvorgang vereinfacht werden kann.

Vorteilhafte Ausführungsformen und Weiterbildungen ergeben sich aus den beigefügten Zeichnungen:

Darin zeigen:
- Fig. 1: eine Darstellung einer erfindungsgemäßen Vorrichtung;
- Fig. 2: eine weitere Darstellung einer erfindungsgemäßen Vorrichtung;
- Fig. 3: eine weitere Darstellung einer erfindungsgemäßen Vorrichtung;
- Fig. 4: eine Gesamtdarstellung einer erfindungsgemäßen Transporteinrichtung;
- Fig. 5: eine Draufsicht von unten auf eine erfindungsgemäße Transporteinrichtung;
- Fig. 6: eine Seitenansicht einer erfindungsgemäßen Transporteinrichtung;
- Fig. 7: eine weitere Seitenansicht einer erfindungsgemäßen Transporteinrichtung; und
- Fig. 8: eine Detailansicht einer Fixiereinrichtung.

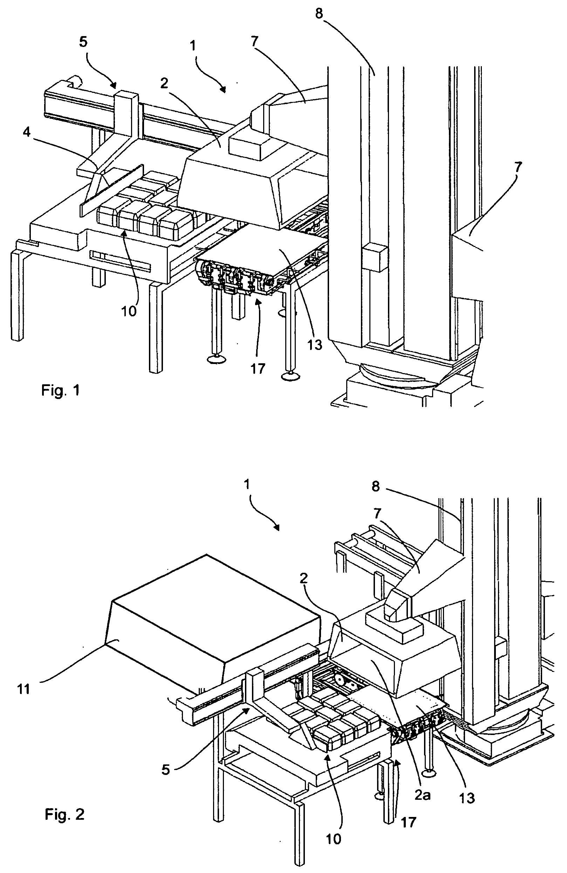

Figur 1 zeigt eine erfindungsgemäße Vorrichtung 1 zum Bilden von Stapeln aus Stückgutzusammenstellungen 10. Dabei bezieht sich das Bezugszeichen 4 auf eine Schiebeeinrichtung, die Bestandteil einer Zuführeinrichtung 5 ist und welche die Stückgutzusammenstellungen 10 in eine Transporteinrichtung 2 hinein schiebt. Daneben werden auch von unten Zwischenlagen 13 an diese Transporteinrichtung 2 herangeführt.

Die Transporteinrichtung 2 ist an einem Arm 7 bevorzugt drehbar angeordnet. Dieser Arm 7 ist wiederum an einem zentralen drehbaren Gestell 8 angeordnet. Auf diese Weise können die aufgenommen Stückgutzusammenstellungen 10 gemeinsam mit einer Zwischenlage 13 auf eine Palette gefördert werden. Ein weiterer entsprechender Arm 7, an dem eine weitere Transporteinrichtung 2 vorgesehen ist, ist ansatzweise auf der rechten Seite in Figur 1 erkennbar.

Figur 2 zeigt eine weitere Ansicht der in Figur 1 gezeigten Vorrichtung 1. Zusätzlich ist hier auch ein (nur schematisch dargestelltes) Reservoir 11 für Zwischenlagen 13 erkennbar.

Man erkennt, dass die Stückgutzusammenstellungen 10 von der Seite her in die Transporteinrichtung 2 eingeschoben werden. Zu diesem Zweck weist die Transporteinrichtung 2 eine seitliche Öffnung 2a auf. Die Transporteinrichtung 2 selbst wird von oben her an die Zwischenlagen 13 herangeführt.

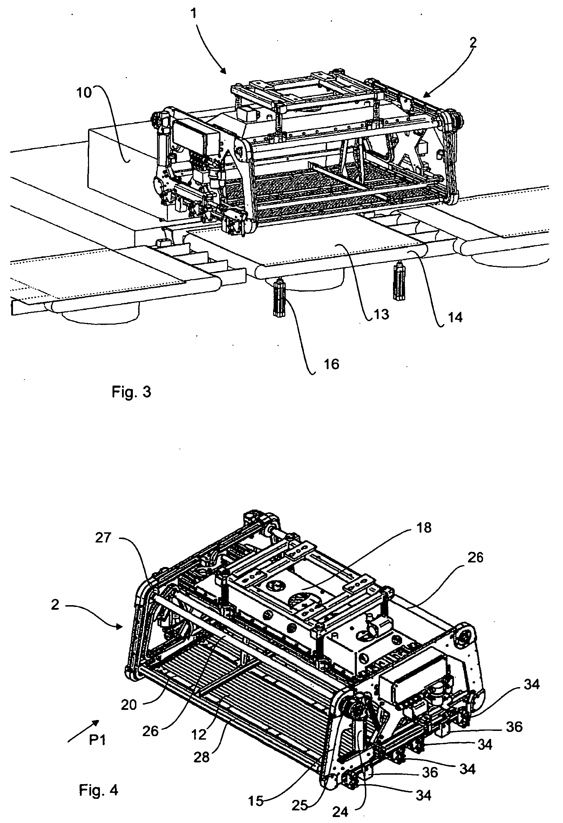

Figur 3 zeigt eine weitere Darstellung einer erfindungsgemäßen Vorrichtung 1. Man erkennt hier, dass die Zwischenlagen 13 vorübergehend auf einen Tisch 14 abgelegt werden, bevor sie von einer Transporteinrichtung 2 ergriffen werden. Dieser Tisch 14 kann mittels gesteuert betätigbarer Zylinder 16 in seiner Höhe verändert werden, um eine Zwischenlage von unten an die Transporteinrichtung 2 heranzuführen.

Figur 4 zeigt eine erfindungsgemäße Transporteinrichtung 2. Diese weist zwei Seitenteile 15 auf, zwischen denen eine Abstützeinrichtung 6 angeordnet ist. Diese Abstützeinrichtung 6 weist dabei eine Vielzahl von drehbaren Körpern 12 auf. Zum Transport wird eine Stückgutzusammenstellung bzw. Gebindelage seitlich in Richtung des Pfeils P in die Transporteinrichtung 2 hinein geschoben und während dieses Vorgangs werden die drehbaren Körper 12, bei denen es sich um Rollen handelt, gedreht. Nachdem die Stückgutzusammenstellung in die Transporteinrichtung 2 hinein geschoben ist, kann die Transporteinrichtung die Stückgutzusammenstellung transportieren.

Weiterhin ist eine verschiebbare Stange 28 vorgesehen, welche die Stückgutzusammenstellung im Inneren der Transporteinrichtung 2 in Richtung des Pfeils P1 ausrichten kann. Zu diesem Zweck kann sich die Stange 28 in einer Schiene entlang des Pfeils P1 verschieben. Während die Stückgutzusammenstellung eingeführt wird, wird die Stange 28 nach oben beiseite gefahren, um das Einführen der Stückgutzusammenstellung nicht zu behindern.

Das Bezugszeichen 26 bezieht sich auf eine zwischen den beiden Seitenteile 15 angeordnete Welle. Diese Welle wird durch einen Motor 24 und ein Getriebe 25 gedreht. Mittels dieser Welle 26 und zwei an ihr angeordnete Zahnräder 27 (nur ein Zahnrad ist sichtbar) kann die Abstützeinrichtung 6 über eine offene Kette bewegt werden und somit den Bereich unterhalb der Stückgutzusammenstellung frei geben. Eine entsprechende Welle 26 ist auch an der in Fig. 4 hinteren Seite der Transporteinrichtung 2 vorgesehen.

Über einen Träger 18 kann die Transporteinrichtung 2 an einem Schwenkarm angeordnet werden. Die Vorrichtung weist weiterhin eine Schiene auf, in der die Abstützeinrichtung 6 verschoben werden kann, um den in Figur 1 durch die Abstützeinrichtung 6 geschlossenen Bereich zu öffnen. Das Bezugszeichen 34 bezieht sich auf die oben erwähnten Koppeleinrichtungen, um die leistenförmigen Körper bzw. Saugleisten 20 mit Vakuum zu versorgen. Dabei sind diese Koppeleinrichtungen 34 so gestaltet, dass sie nur in dem in Figur 1 gezeigten geschlossenen Zustand der Abstützeinrichtung ein Vakuum auf die Saugleisten aufbringen.

Nachdem die Stückgutzusammenstellung in die Transporteinrichtung 2 eingeschoben wurde oder auch davor, können in dem in Figur 1 gezeigten geschlossenen Zustand über die Koppeleinrichtungen 34 die Saugleisten 20 aktiviert werden, um eine unterhalb der Transporteinrichtung 2 angeordnete Zwischenlage anzusaugen bzw. aufzunehmen und anschließend diese Zwischenlage gemeinsam mit der Stückgutzusammenstellung 2 zu transportieren. Durch diesen gemeinsamen Transport wird eine erhebliche Kosten- und Zeiteinsparung erreicht.

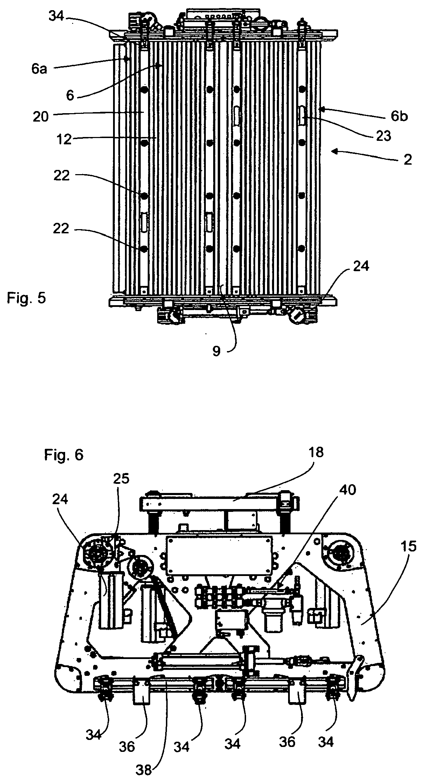

Figur 5 zeigt eine Draufsicht von unten auf eine erfindungsgemäße Transporteinrichtung 2. Man erkennt, dass hier vier leistenförmige Körper bzw. Saugleisten 20 in die Abstützeinrichtung 6 integriert sind. Dabei sind diese leistenförmigen Körper 20 jeweils zwischen drehbaren Körpern 12 angeordnet. Vorzugsweise sind die leistenförmigen Körper 20 derart bezüglich der drehbaren Körper angeordnet, dass nach oben hin der leistenförmige Körper 20 nicht mit den Stückgutzusammenstellungen in Berührung kommt. Bei der in Figur 2 gezeigten Ausführungsform setzt sich die Abstützeinrichtung 6 aus zwei im Wesentlichen symmetrisch zueinander ausgebildeten Teilabschnitten 6a und 6b zusammen.

Um die Stückgutzusammenstellung an ihren Zielort abzulegen werden die beiden Teilabschnitte 6a, 6b auseinander gezogen, so dass zwischen den beiden Teilabschnitten 6a, 6b eine Öffnung 9 frei gegeben wird, durch welche die Stückgutzusammenstellung nach unten fallen kann. Bei der in Figur 2 gezeigten Ausführungsform sind insgesamt vier leistenförmige Körper 20 vorgesehen an denen wiederum eine Vielzahl von Fixierelementen bzw. Saugelementen 22 vorgesehen ist. Durch die in Figur 2 gezeigte Anordnung wird eine sehr gleichmäßige Verteilung dieser Saugköpfe 22 über die gesamte Fläche der Transporteinrichtung 2 erreicht.

Damit ist es möglich, die Zwischenlagen während der Beladung des Jalousiekopfes (d.h. der Transporteinrichtung 2) durch die Transporteinrichtung 2 direkt unter der Beladefläche anzusaugen. Beim Ablegen der Stückgutzusammenstellung auf die Palette können somit durch Anfahren von nur einer Position die Zwischenlage und die Gebindelage abgelegt werden.

Das Bezugszeichen 34 zeigt auch hier eine Koppeleinrichtung, um die leistenförmigen Körper 20 und damit auch die einzelnen Saugelemente 22 mit Vakuum zu beaufschlagen. Das Bezugszeichen 23 bezieht sich auf Sensoreinrichtungen, die das Vorhandensein von Zwischenlagen feststellen. Dabei kann es sich beispielsweise um Tastsensoren oder Lichtsensoren handeln.

Figur 6 zeigt eine Seitenansicht einer erfindungsgemäßen Transporteinrichtung 2. Man erkennt hier ebenfalls Stützkörper 36, die als Transportsicherung dienen, um eine Beschädigung insbesondere der Koppeleinrichtungen 34 zu vermeiden. Nachdem dies erfolgt ist, werden die Zwischenlagen durch die in Figur 5 gezeigten Ansaugelemente angesaugt. Das Bezugszeichen 40 bezieht sich auf eine Vakuumverteileinrichtung, welche die einzelnen in Figur 2 gezeigten leistenförmigen Körper 20 mit Vakuum beaufschlagt. Daneben kann über diese Vakuumverteileinrichtung 40 auch Druckluft an die Koppeleinrichtungen 34 und damit die Saugelemente 22 ausgegeben werden.

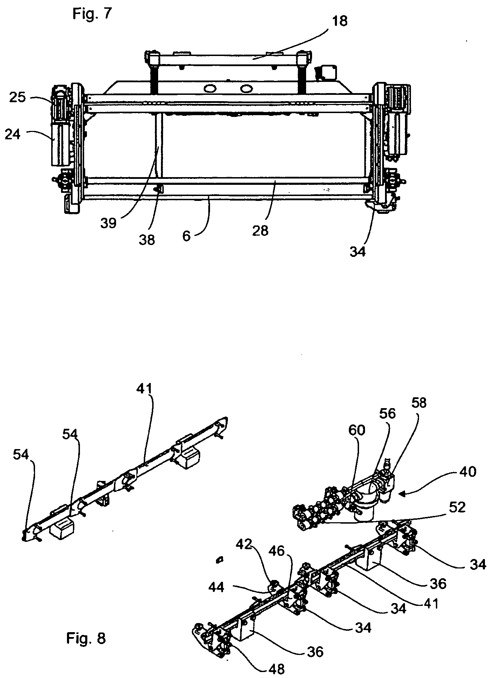

Figur 7 zeigt eine weitere Seitenansicht einer erfindungsgemäßen Transporteinrichtung. Man erkennt hier insbesondere eine weitere Verschiebeeinrichtung 38, die zum seitlichen Ausrichten der Gebindezusammenstellung dient. Diese weitere Verschiebeeinrichtung 38 ist dabei an einen Träger 39 angeordnet. Eine weitere (nicht gezeigte) Verschiebeeinrichtung ist an der gegenüberliegenden Seite der Transporteinrichtung 2 vorgesehen.

Das Bezugszeichen 28 bezieht sich wieder auf die Stange, welche ein Herausfallen der Gebinde aus der Transporteinrichtung 2 verhindert.

Figur 8 veranschaulicht die Zuführung des Vakuums an die (nicht gezeigten) leistenförmigen Körper aus Figur 2. Dabei sind hier insgesamt vier Koppeleinrichtungen vorgesehen, welche die leistenförmigen Körper 20 mit dem Vakuum beaufschlagen. Diese Koppeleinrichtungen 34 sind dabei in der Figur 5 gezeigten Ausführungsform an einem gemeinsamen Träger 41 angeordnet. Dieser Träger 41 wiederum ist über Verbindungseinrichtungen 54 an den Seitenteilen 15 der in Figur 1 gezeigten Transporteinrichtung angeordnet. Die Koppeleinrichtungen 34 weisen Koppelköpfe 42 auf, die nach unten schwenkbar sind.

Zu diesem Zwecke sind diese Koppelköpfe 42 an einem Auslegearm 44 angeordnet, der wiederum schwenkbar gegenüber einem Träger 46 angeordnet ist. Das Bezugszeichen 48 bezieht sich auf einen Anschluss, mit dem beispielsweise über einen Schlauch der Koppelkopf 42 mit Vakuum beaufschlagt werden kann. Auch kann über diesen Schlauch Druckluft zugeführt werden.

Das Bezugszeichen 40 zeigt auch hier die Vakuumverteileinrichtung, die jedoch nicht an der Figur 8 gezeigten Position angeordnet ist, sondern bevorzugt unterhalb des Trägers 41. Diese Vakuumverteileinrichtung 40 weist eine Vielzahl von Ausgängen 52 auf, an welche die oben erwähnten Schläuche zur Versorgung der einzelnen Koppelköpfe 42 angeschlossen sein können. Durch die Beaufschlagung der Koppelköpfe 42 mit Vakuum kann, wie oben erwähnt, eine Zwischenlage angezogen werden. Um die Zwischenlage abzusenken wird dieses Vakuum aufgehoben und bevorzugt zusätzlich Druckluft ausgegeben. Anschließend kann die Abstützeinrichtung 6 gegenüber den Koppelköpfen 42 bewegt werden. Damit ist es möglich, die Koppelköpfe 42 und die gesamte Koppeleinrichtung 34 stationär und damit weniger verschleißanfällig zu halten. Das Bezugszeichen 56 bezieht sich auf einen Filter, dem eine Venturidüse 58 nachgeschaltet ist. Die Vakuumverteileinrichtung 40 wird über einen Anschluss 60 mit Druckluft versorgt.

Anstelle von drehbaren Rollen oder Walzen kann die Abstützeinrichtung 6 der Transporteinrichtung 2 aus nicht drehbaren Leisten, Stäben oder Lamellen gebildet werden. Denkbar ist auch eine geteilte Platte, deren Hälften gesteuert auseinander- oder zusammenfahrbar gelagert sein können.

## Patentansprüche

1. Vorrichtung (1) zum Bilden von Stapeln aus Stückgutzusammenstellungen (10) mit einer beweglichen Transporteinrichtung (2) zum Transportieren der Stückgutzusammenstellung (10), mit einer Zuführeinrichtung (5), welche der Transporteinrichtung (2) die Stückgutzusammenstellung (10) zuführt, wobei die Transporteinrichtung (2) eine Abstützeinrichtung (6) aufweist, die die Stückgutzusammenstellung (10) wenigstens zeitweise abstützt, gegenüber der die Stückgutzusammenstellung (10) bewegbar ist und die im Wesentlichen vollständig aus einem unterhalb der Stückgutzusammenstellung (10) liegenden Bereich entfernbar ist, wobei die Transporteinrichtung (2) wenigstens eine steuerbare Fixiereinrichtung zum vorübergehenden Fixieren einer Zwischenlage (13) aufweist, wobei diese Fixiereinrichtung zum Fixieren der Zwischenlage (13) unterhalb der Stückgutzusammenstellung (10) bewegbar ist und die Abstützeinrichtung (6) gegenüber der Transporteinrichtung (2) bewegbar ist,
**dadurch gekennzeichnet, dass**
die Fixiereinrichtung (20, 22) derart in die Abstützeinrichtung (6) integriert ist, dass ihre Bewegung an die Bewegung der Abstützeinrichtung (6) gekoppelt ist.

2. Vorrichtung (1) nach Anspruch 1,
**dadurch gekennzeichnet, dass**
die Abstützeinrichtung (6) eine Vielzahl von drehbaren Körpern (12) aufweist, denen gegenüber die Stückgutzusammenstellung (10) abstützbar ist.

3. Vorrichtung (1) nach wenigstens einem der vorangegangenen Ansprüche,
**dadurch gekennzeichnet, dass**
die Abstützeinrichtung (6) in der Ebene einer Bodenfläche der Stückgutzusammenstellung (10) gegenüber der Stückgutzusammenstellung (10) bewegbar ist.

4. Vorrichtung (1) nach wenigstens einem der vorangegangenen Ansprüche,
**dadurch gekennzeichnet, dass**
die Fixiereinrichtung wenigstens ein Fixierelement (22) aufweist, welches zwischen zwei drehbaren Körpern (12) angeordnet ist.

5. Vorrichtung (1) nach wenigstens einem der vorangegangenen Ansprüche,
**dadurch gekennzeichnet, dass**
die Fixiereinrichtung einen leistenförmigen Körper (20) aufweist, der in zwei seitlichen Schienen gemeinsam mit den drehbaren Körpern (12) bewegbar ist.

6. Vorrichtung (1) nach wenigstens einem der vorangegangenen Ansprüche,
**dadurch gekennzeichnet, dass**
wenigstens ein Fixierelement (22) ein steuerbarer Saugkopf (22) ist.

7. Vorrichtung (1) nach Anspruch 5,
**dadurch gekennzeichnet, dass**
die Fixiereinrichtung zwei voneinander beabstandete leistenförmige Körper (20) aufweist, wobei an jedem dieser leistenförmigen Körper wenigstens ein Fixierelement (22) angeordnet ist und wobei zwischen diesen beiden leistenförmigen Körpern (20) eine Vielzahl von drehbaren Körpern (12) vorgesehen ist.

8. Vorrichtung (1) nach wenigstens einem der vorangegangenen Ansprüche,
**dadurch gekennzeichnet, dass**
die Transporteinrichtung (2) am einem um eine vertikale Achse schwenkbaren Arm (7) angeordnet ist.

9. Vorrichtung (1) nach wenigstens einem der vorangegangenen Ansprüche,
**dadurch gekennzeichnet, dass**
die Vorrichtung (1) eine Heranführungseinheit (17) aufweist, welche die Zwischenlagen (13) an eine Unterseite der Abstützeinrichtung (6) heranführt.

10. Vorrichtung (1) nach wenigstens einem der vorangegangenen Ansprüche,
**dadurch gekennzeichnet, dass**
die Transporteinrichtung (2) eine Koppeleinrichtung (34) aufweist, welche in einem Betriebszustand der Transporteinrichtung (2) in Fluidverbindung mit der Fixiereinrichtung steht, und die in einem weiteren Betriebszustand der Fixiereinrichtung von dieser getrennt ist.

11. Vorrichtung nach Anspruch 10,
**dadurch gekennzeichnet, dass**
die Koppeleinrichtung (34) schwenkbar ausgeführt ist.

12. Transporteinrichtung (2) zum Transportieren von Stückgutzusammenstellungen (10), mit einer Abstützeinrichtung (6), gegenüber der die Stückgutzusammenstellung (10) bewegbar ist und die im Wesentlichen vollständig aus einem unterhalb der Stückgutzusammenstellung (10) liegenden Bereich entfernbar ist,
wobei
die Transporteinrichtung (2) wenigstens eine steuerbare Fixiereinrichtung zum vorübergehenden Fixieren einer Zwischenlage (13) aufweist, wobei diese Fixiereinrichtung zum Fixieren der Zwischenlage (13) unterhalb der Stückgutzusammenstellung (6) bewegbar ist und die Abstützeinrichtung (6) gegenüber der Transporteinrichtung (2) bewegbar ist,
**dadurch gekennzeichnet, dass**
die Fixiereinrichtung derart in die Abstützeinrichtung (6) integriert ist, dass ihre Bewegung an die Bewegung der Abstützeinrichtung (6) gekoppelt ist.

13. Verfahren zum Bilden von Stapeln aus Stückgutzusammenstellungen (10) mit den Schritten:
- Einführen der Stückgutzusammenstellung (10) in eine Transporteinrichtung (2), wobei die Stückgutzusammenstellung gegenüber einer Abstützeinrichtung (6) der Transporteinrichtung (2) und auf diese Abstützeinrichtung (6) verschoben wird;
- Transportieren der Stückgutzusammenstellung (10), wobei während des Transports die Stückgutzusammenstellung (10) durch die Abstützeinrichtung (6) abgestützt wird, wobei mittels einer an der Abstützeinrichtung (6) angeordneten Fixiereinrichtung eine Zwischenlage (13) wenigstens zeitweise von der Transporteinrichtung (2) aufgenommen wird und die Abstützeinrichtung (6) gegenüber der Transporteinrichtung (2) bewegt wird,
**dadurch gekennzeichnet, dass**
die in der Abstützeinrichtung (6) integrierte und mit der Abstützeinrichtung (6) gekoppelte Fixiereinrichtung gemeinsam mit der Abstützeinrichtung (6) gegenüber der Stückgutzusammenstellung (10) bewegt wird.

## Claims

1. Device (1) for forming stacks of piece goods batches (10), comprising a movable transport device (2) for transporting the piece goods batch (10), and comprising a feed device (5) which feeds the piece goods batch (10) to the transport device (2), wherein the transport device (2) comprises a support device (6) which at least intermittently supports the piece goods batch (10) and relative to which the piece goods batch (10) is movable and which can be removed essentially completely from a region located below the piece goods batch (10), wherein the transport device (2) comprises at least one controllable fixing device (14) for temporarily fixing an intermediate layer (13), wherein this fixing device for fixing the intermediate layer (13) is movable below the piece goods batch (10) and the support device (6) is movable with respect to the transport device (2), **characterised in that** the fixing device (20, 22) is integrated in the support device (6) in such a way that its movement is coupled to the movement of the support device (6).

2. Device (1) according to claim 1, **characterised in that** the support device (6) comprises a plurality of rotatable bodies (12), against which the piece goods batch (10) can be supported.

3. Device (1) according to at least one of the preceding claims, **characterised in that** the support device (6) can be moved relative to the piece goods batch (10) in the plane of a bottom face of the piece goods batch (10).

4. Device (1) according to at least one of the preceding claims, **characterised in that** the fixing device (14) comprises at least one fixing element (22) which is arranged between two rotatable bodies (12).

5. Device (1) according to at least one of the preceding claims, **characterised in that** the fixing device comprises a strip-shaped body (20) which can be moved in two side rails together with the rotatable bodies (12).

6. Device (1) according to at least one of the preceding claims, **characterised in that** at least one fixing element (22) is a controllable suction head (22).

7. Device (1) according to claim 5, **characterised in that** the fixing device comprises two strip-shaped bodies (20) which are spaced apart from one another, wherein at least one fixing element (22) is arranged on each of these strip-shaped bodies, and wherein a plurality of rotatable bodies (12) is provided between these two strip-shaped bodies (20).

8. Device (1) according to at least one of the preceding claims, **characterised in that** the transport device (2) is arranged on an arm (7) which can pivot about a vertical axis.

9. Device (1) according to at least one of the preceding claims, **characterised in that** the device (1) comprises an approaching unit (17) which makes the intermediate layers (13) approach an underside of the support device (6).

10. Device (1) according to at least one of the preceding claims, **characterised in that** the transport device (2) comprises a coupling device (34) which in one operating state of the transport device (2) is in fluid connection with the fixing device (14) and which in a further operating state of the fixing device (14) is separated from the latter.

11. Device (1) according to claim 10, **characterised in that** the coupling device (34) is designed in a pivotable manner.

12. Transport device (2) for transporting piece goods batches (10), comprising a support device (6), relative to which the piece goods batch (10) is movable and which can be removed essentially completely from a region located below the piece goods batch (10), wherein the transport device (2) comprises at least one controllable fixing device (14) for temporarily fixing an intermediate layer (13), wherein this fixing device (14) for fixing the intermediate layer (13) can move below the piece goods batch (6), and the support device (6) is movable relative to the transport device (2), **characterised in that** the fixing device is integrated in the support device (6) in such a way that its movement is coupled to the movement of the support device (6).

13. Method for forming stacks of piece goods batches (10), comprising the steps:
- introducing the piece goods batch (10) into a transport device (2), wherein the piece goods batch is displaced relative to a support device (6) of the transport device (2) and on this support device (6);
- transporting the piece goods batch (10), wherein during transport the piece goods batch (10) is supported by the support device (6),
wherein an intermediate layer (13) is at least intermittently received by the transport device (2) by means of a fixing device (14) arranged on the support device (6) and the support device (6) is moved relative to the transport device (2), **characterised in that** the fixing device integrated in the support device (6) and coupled with the support device (6) is moved together with the support device (6) relative to the piece goods batch (10).

## Revendications

1. Dispositif (1) pour la formation de piles d'assortiments de marchandises (10), avec un dispositif de transport (2) mobile pour le transport de l'assortiment de marchandises (10), avec un dispositif d'alimentation (5) qui alimente l'assortiment de marchandises (10) dans le dispositif de transport (2), ledit dispositif de transport (2) comportant un dispositif de support (6) soutenant au moins temporairement l'assortiment de marchandises (10), par rapport auquel l'assortiment de marchandises (10) est mobile et qui peut être éloigné presque totalement d'une zone située au-dessous de l'assortiment de marchandises (10), le dispositif de transport (2) comportant au moins un dispositif de fixation pouvant être commandé pour la fixation transitoire d'une couche intermédiaire (13), ledit dispositif de fixation étant déplaçable au-dessous de l'assortiment de marchandises (10) pour la fixation de la couche intermédiaire (13) et le dispositif de support (6) étant mobile par rapport au dispositif de transport (2),
**caractérisé en ce que**
le dispositif de fixation (20, 22) est intégré au dispositif de support (6) de manière à coupler son mouvement au mouvement du dispositif de support (6).

2. Dispositif (1) selon la revendication 1,
**caractérisé en ce que**
le dispositif de support (6) comporte une pluralité de corps rotatifs (12) contre lesquels l'assortiment de marchandises (10) peut être supporté.

3. Dispositif (1) selon au moins une des revendications précédentes,
**caractérisé en ce que**
le dispositif de support (6) est déplaçable vers l'assortiment de marchandises (10) au niveau d'une surface de base de l'assortiment de marchandises (10).

4. Dispositif (1) selon au moins une des revendications précédentes,
**caractérisé en ce que**
le dispositif de fixation comporte au moins un élément de fixation (22) disposé entre deux corps rotatifs (12).

5. Dispositif (1) selon au moins une des revendications précédentes,
**caractérisé en ce que**
le dispositif de fixation comporte un corps en forme de bande (20) mobile avec les corps rotatifs (12) dans deux rails latéraux.

6. Dispositif (1) selon au moins une des revendications précédentes,
**caractérisé en ce qu'**
au moins un élément de fixation (22) est une tête d'aspiration (22) réglable.

7. Dispositif (1) selon la revendication 5,
**caractérisé en ce que**
le dispositif de fixation comporte deux corps en forme de bande (20) espacés l'un de l'autre, au moins un élément de fixation (22) étant disposé sur chacun desdits corps en forme de bande et une pluralité de corps rotatifs (12) étant prévue entre lesdits deux corps en forme de bande (20).

8. Dispositif (1) selon au moins une des revendications précédentes,
**caractérisé en ce que**
le dispositif de transport (2) est disposé sur un bras (7) pivotant autour d'un axe vertical.

9. Dispositif (1) selon au moins une des revendications précédentes,
**caractérisé en ce que**
ledit dispositif (1) comporte une unité de rapprochement (17) qui amène les couches intermédiaires (13) contre une face inférieure du dispositif de support (6).

10. Dispositif (1) selon au moins une des revendications précédentes,
**caractérisé en ce que**
le dispositif de transport (2) comporte un dispositif d'accouplement (34) en liaison fluidique avec le dispositif de fixation dans un état de fonctionnement du dispositif de transport (2), et séparé de celui-ci dans un autre état de fonctionnement du dispositif de fixation.

11. Dispositif selon la revendication 10,
**caractérisé en ce que**
le dispositif d'accouplement (34) est pivotant.

12. Dispositif de transport (2) pour le transport d'assortiments de marchandises (10), avec un dispositif de support (6) par rapport auquel l'assortiment de marchandises (10) est mobile, et qui peut être éloigné presque totalement d'une zone située au-dessous de l'assortiment de marchandises (10),
ledit dispositif de transport (2) comportant au moins un dispositif de fixation pouvant être commandé pour la fixation transitoire d'une couche intermédiaire (13), ledit dispositif de fixation étant déplaçable en dessous de l'assortiment de marchandises (10) pour la fixation de la couche intermédiaire (13) et le dispositif de support (6) étant mobile par rapport au dispositif de transport (2),
**caractérisé en ce que**
le dispositif de fixation est intégré au dispositif de support (6) de manière à coupler son mouvement au mouvement du dispositif de support (6).

13. Procédé de formation de piles d'assortiments de marchandises (10), comprenant les étapes suivantes :
- introduction de l'assortiment de marchandises (10) dans un dispositif de transport (2), ledit assortiment de marchandises étant déplacé par rapport à un dispositif de support (6) du dispositif de transport (2) et vers ledit dispositif de support (6) ;
- transport de l'assortiment de marchandises (10), ledit assortiment de marchandises (10) étant soutenu par le dispositif de support (6) pendant le transport, une couche intermédiaire (13) étant au moins temporairement reçue par le dispositif de transport (2) au moyen d'un dispositif de fixation disposé sur le dispositif de support (6) et le dispositif de support (6) étant déplacé par rapport au dispositif de transport (2),
**caractérisée en ce que**
le dispositif de fixation intégré au dispositif de support (6) et couplé au dispositif de support (6) est déplacé avec le dispositif de support (6) par rapport à l'assortiment de marchandises (10).
